# EUROPÄISCHE PATENTANMELDUNG

(11) **EP 0 872 968 A2**
(43) Veröffentlichungstag der Anmeldung: **21.10.1998**
(21) Anmeldenummer: 98106390.2
(22) Anmeldetag: 08.04.1998
(51) Int. Cl.: H04B 10/28

(54) **Sendeanordnung für optische Signale**

(30) Priorität: 18.04.1997 DE 19716247
(71) Anmelder: ROBERT BOSCH GMBH, 70442 Stuttgart (DE)
(72) Erfinder: Schwander, Thomas, 71522 Backnang (DE)

(57) **Zusammenfassung**

Es wird eine Sendeanordnung für optische Signale vorgeschlagen, die zum Senden und Modulieren, aber auch zum Empfangen modulierter Signale dient. Diese Sende/Empfangsanordnung umfaßt
- für bidirektionalen (Duplex-) Betrieb eine direkt modulierbare Strahlungsquelle (1) und einen nachgeschalteten, für Sendestrahlung transparenten Elektroabsorptionsmodulator (2),
- für Ping-Pong-Betrieb (Halbduplex) eine Strahlungsquelle (1) und einen nachgeschalteten Elektroabsorptionsmodulator (2), der zwischen Sende- und Empfangsbetrieb umgeschaltet wird.
In beiden Fällen wirkt der Elektroabsorptionsmodulator (2) für Empfangsstrahlung (9) absorbierend und detektierend.

## Beschreibung

### Stand der Technik

Die Erfindung geht aus von einer Sendeanordnung nach der Gattung des Hauptanspruchs.
Es ist schon eine Sendeanordnung bekannt (H. G. Unger: Optische Nachrichtentechnik, Teil II, 2. Auflage, 1992, Hüthig, Heidelberg, Seite 565, Bild 12.57). Deren üblicher Aufbau für externe Modulation eines Sendelasers besteht darin, daß auf einem Substrat als Strahlungsquelle ein Sendelaser angeordnet ist, der Gleichlicht liefert, das einen Elektroabsorptionsmodulator (EAM) durchstrahlt, der auf demselben Substrat angeordnet ist. Ein solcher Elektroabsorptionsmodulator ist bezüglich des prinzipiellen Aufbaus einer Empfangsdiode ähnlich, die Funktion ist aber eine andere. Er ist bei einer Spannung (z.B. 0 ... + 0,5 Volt) transparent und bei einer anderen Spannung (z.B. - 5 Volt) absorbierend.

Bei der bekannten Sendeanordnung ist keine Möglichkeit zum Empfangen optischer, modulierter Strahlung vorgesehen.

### Vorteile der Erfindung

Die erfindungsgemäße Sendeanordnung mit den Merkmalen des Anspruchs 1 beziehungsweise 2 hat demgegenüber folgenden Vorteil.
Es läßt sich eine einfache Sende-/Empfangsvorrichtung für optische Signale schaffen. Es wird nämlich eine Sendeanordnung für optische Signale vorgeschlagen, die zum Senden und Modulieren, aber auch zum Empfangen modulierter Signale dient und daher als Sende/Empfangsanordnung bezeichnet werden kann. Diese Sende/Empfangsanordnung umfaßt
- für bidirektionalen Betrieb bei zwei Wellenlängen eine direkt modulierbare Strahlungsquelle und einen nachgeschalteten, für die Sendestrahlung transparenten Elektroabsorptionsmodulator,
- für Ping-Pong-Betrieb (Halbduplex) eine Strahlungsquelle und einen nachgeschalteten Elektroabsorptionsmodulator, der zwischen Sende- und Empfangsbetrieb umgeschaltet wird.
In beiden Fällen wirkt der Elektroabsorptionsmodulator für Empfangsstrahlung absorbierend und detektierend.

Generell besteht das Bestreben, optische Übertragungsstrecken nicht nur in einer Richtung zu betreiben, sondern entweder abwechselnd im sogenannten Ping-Pong-Betrieb in einander entgegengesetzten Richtungen (Halb-Duplex) oder dauernd in beiden Richtungen (Duplex) mit Hilfe des Wellenlängenmultiplex. Beim Stand der Technik tritt dabei das Problem auf, die Sendestrahlung in einen Wellenleiter einzukoppeln und die Empfangsstrahlung, die ja zunächst in derselben Achse wie die Sendestrahlung geführt ist, umzulenken, damit sie einem Empfangsdetektor beispielsweise einer Empfangsdiode zugeführt werden kann. Zur Vereinfachung ist es denkbar, die Empfangsstrahlung durch die Strahlungsquelle (Sendelaser) hindurchstrahlen zu lassen. Dabei trifft die Empfangsstrahlung nach dem Durchstrahlen des Sendelasers auf dessen Monitordiode, die im Empfangsfall als Empfangsdetektor verwendet wird. Dies ist aber nur sinnvoll, wenn die Empfangswellenlänge λ_{E} größer als die Sendelaserwellenlänge (Senderwellenlänge) λ_{L} ist, weil andernfalls die Empfangsstrahlung im Sendelaser zu sehr gedämpft wird. Diese Einschränkung ist ungünstig bei bidirektionalen Übertragungsstrecken.

Des weiteren legt es der Stand der Technik nahe, für Ping-Pong-Betrieb eine als Strahlungsquelle dienende Sendelaserdiode direkt durch negative Vorspannung in einen (schlechten) Empfangsdetektor (Empfangsdiode) zu verwandeln. Diese Empfangsdiode fungiert auf diese Weise abwechselnd als Strahlungsquelle (Sender) und Empfänger (Empfangsdetektor). Dies gilt nur bei sehr niedrigen Datenraten, da für das Umschalten des Sendelasers Zeit benötigt wird. Die Empfangswellenlänge λ_{E} darf dabei nicht größer als die Sendewellenlänge λ_{L} sein, um eine ausreichende Empfangsempfindlichkeit zu gewährleisten.

Anordnungen, bei welchen eine fotoempfindliche Schicht ober- oder unterhalb einer Sendelaserdiode angeordnet ist, funktionieren nur, wenn die Empfangswellenlänge λ_{E} kleiner ist als die Sendewellenlänge λ_{L}; dann kann aber gleichzeitig gesendet und empfangen werden. Jedoch ist die Empfangsempfindlichkeit meist schlecht, da nur ein Teil der Empfangsstrahlung die fotoempfindliche Schicht erreicht.

Die Anordnung nach der Erfindung kommt dagegen ohne Multiplexer und solche Wellenleiterstrukturen aus, welche die Empfangsstrahlung am Sendelaser vorbeileiten (vgl. DE 41 11 095).

Der Kern der Erfindung liegt in der Nutzung eines Wellenleiterstücks, das für die Sendewellenlänge transparent und für , die Empfangswellenlänge absorbierend ist. Der Wellenleiter ist zwischen dem Sendelaser und dem übertragenden Lichtwellenleiter angeordnet. Er ist Bestandteil eines Elektroabsorptionsmodulators, der beispielsweise den sogenannten Quantum-Confined-Stark-Effekt ausnützt (quantenunterstützter Stark-Effekt, vgl. H. G. Unger: Optische Nachrichtentechnik, Teil 11, 2. Auflage, 1992, Hüthig, Heidelberg, Seite 563). Weiteres Merkmal der erfindungsgemäßen Anordnung ist, daß der Sendelaser direkt moduliert wird, wenn die Anordnung bidirektional betrieben wird.

Die Umschaltung des Elektroabsorptionsmodulators zwischen Sende- und Empfangsbetrieb, also zwischen Transparenz und Absorption kann sehr schnell (ungefähr in 100 Pikosekunden) erfolgen. Die Anordnung kann daher im Ping-Pong-Betrieb bei einer einzigen Wellenlänge λ_{L} = λ_{E} arbeiten. Wenn die Empfangswellenlänge λ_{E} kleiner als die Sendelaserwellenlänge λ_{L} ist, kann die Anordnung im Duplexbetrieb (Wellenlängenmultiplex) arbeiten, wie sich aus dem Absorptionsverlauf über der Wellenlänge ergibt. Zur Verbesserung des Wirkungsgrades ist die Integration mit einem Transformationswellenleiter (vergleiche DE 41 03 896) von Vorteil.

Durch die in den Unteransprüchen aufgeführten Merkmale sind vorteilhafte Weiterbildungen und Verbesserungen der in den Ansprüchen 1 und 2 angegebenen Sende/Empfangsanordnungen möglich.
Besonders vorteilhaft ist, daß sich durch Integration auf einem einzigen Substrat eine besondere Vereinfachung erzielen läßt.

### Zeichnung

Ausführungsbeispiele der Erfindung sind in der Zeichnung dargestellt und in der nachfolgenden Beschreibung näher erläutert. Es zeigen Figur 1 eine Prinzipdarstellung einer Sende/Empfangsanordnung nach der Erfindung, Figur 2 eine erste und eine zweite Betriebsweise der Sende/Empfangsanordnung, Figur 3 einen ersten Zustand einer dritten Betriebsweise, Figur 4 einen zweiten Zustand der dritten Betriebsweise, Figur 5 ein Dämpfungsdiagramm eines Elektroabsorptionsmodulators.

### Beschreibung des Ausführungsbeispiels

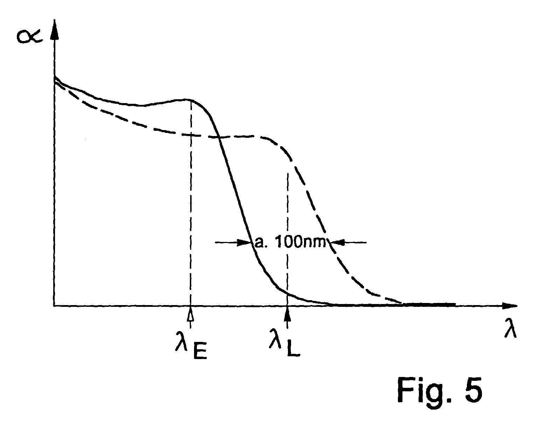

In Figur 5 ist das Absorptionsverhalten eines geeigneten Elektroabsorptionsmodulators dargestellt. Dort ist die Absorption α über der Wellenlänge λ aufgetragen. Bei kleinen Wellenlängen ist die Absorption α hoch. Sie fällt an einer sogenannten Absorptionskante auf niedrige Werte ab, ist also jenseits der Absorptionskante so gering, daß der Elektroabsorptionsmodulator hier transparent ist. Die durchgezogene Linie zeigt den Verlauf ohne angelegte Sperrspannung. Die unterbrochen dargestellte Linie zeigt den Verlauf mit Sperrspannung (z.B. + 5 Volt). Es ist ersichtlich, daß sich der dargestellte Effekt der Verschiebung der Absorptionskante je nach angelegter Sperrspannung auch zur externen Intensitätsmodulation eines Gleichlichtsendelaserstrahles der Wellenlänge λ_{L} einsetzen läßt.

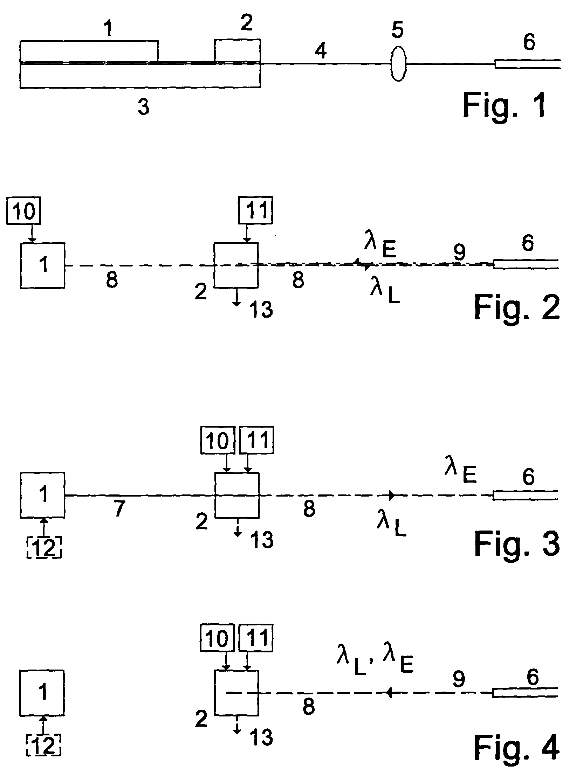

In der schematischen Darstellung der Figur 1 ist als Strahlungsquelle 1 ein Sendelaser auf einem Substrat 3 vorgesehen. Auf demselben Substrat 3 befindet sich ein Elektroabsorptionsmodulator 2. Entlang der Strahlachse 4 strahlt der Sendelaser 1 durch den Elektroabsorptionsmodulator 2 hindurch. Im Strahlengang befindet sich eine Linse 5. Der Sendestrahl des Sendelasers 1 gelangt zu einem übertragenden Wellenleiter 6 in Gestalt einer Glasfaser.

Figur 2 dient zur Erläuterung der Anwendung der Anordnung nach Figur 1 für den Fall des Duplexbetriebes. Zur direkten Modulation des Sendelasers 1 ist eine Modulationssignalquelle 10 vorgesehen. Sie sorgt für eine Intensitätsmodulation der Sendestrahlung 8. Im Strahlengang der Sendestrahlung 8 befindet sich ein Elektroabsorptionsmodulator 2, der mit einer solchen Spannung betrieben wird, daß sich der in Figur 5 als durchgezeichnete Linie dargestellte Verlauf der Absorption über der Wellenlänge λ ergibt. Dementsprechend ist der Elektroabsorptionsmodulator 2 für die Sendestrahlung 8 mit der Sendewellenlänge λ_{L} transparent, so daß diese weitestgehend ungehindert (abgesehen von Dämpfungen und Reflexionen an hier nicht näher dargestellten Linsensystemen u.s.w.) in die Glasfaser 6 gelangt.

Für den Elektroabsorptionsmodulator 2 ist eine Steuereinrichtung 11 vorgesehen, welche die Spannung liefert, die für die Aufrechterhaltung des durchgezeichneten Kurvenverlaufes nach Figur 5 erforderlich ist.

In der anderen Übertragungsrichtung (in der Zeichnung von rechts nach links) breitet sich ausgehend von der Glasfaser 6 parallel zur Sendestrahlung 8 Empfangsstrahlung 9 mit der Empfangswellenlänge λ_{E} aus. Die Empfangswellenlänge λ_{E} ist um so viel kleiner als die Sendewellenlänge λ_{L}, daß λ_{E}, wie in Figur 5 dargestellt, in einem Bereich der Absorptionskennlinie des Elektroabsorptionsmodulators liegt, wo dieser absorbierend wirkt und damit als Empfangsdetektor für die intensitätsmodulierte Empfangsstrahlung 9 dient. Der Ausgang des Empfangsdetektors ist mit 13 bezeichnet. Eine Umschaltung (auf den in Figur 5 unterbrochen dargestellten Kurvenverlauf) ist bei dieser Betriebsweise im allgemeinen nicht nötig.

Wird die Anordnung nach Figur 2 für den Halb-Duplex-Betrieb eingesetzt, können λ_{L} und λ_{E} gleich sein. Der Elektroabsorbitionsmodulator 2 ist dann zwischen Sende- und Empfangsbetrieb durch Verändern seiner Sperrspannung umzuschalten.

Die Figuren 3 und 4 dienen der Erläuterung einer weiteren Betriebsmöglichkeit der Anordnung nach Figur 1, nämlich des Halb-Duplex-Betriebes. Die Bezugszeichen haben prinzipiell dieselbe Bedeutung wie in Figur 2.

In Figur 3 ist die Modulationssignalquelle 10 dem Elektroabsorbitionsmodulator 2 zugeordnet, und der Sendelaser 1 liefert (abgesehen von einer etwaigen Vormodulation durch den Block 12) Gleichlichtstrahlung 7 der Sendewellenlänge λ_{L}. Die Steuereinrichtung 11 liefert jetzt eine Sperrspannung, die einem Kurvenverlauf nach Figur 5 entspricht, der zwischen der durchgezogenen und der unterbrochenen Linie liegt. Diese Sperrspannung entspricht einer Vorspannung, um welche die von der Modulationssignalquelle 10 gelieferte Modulationsspannung oszilliert, so daß der Elektroabsorbitionsmodulator zwischen den beiden in Figur 5 dargestellten Zuständen hin und her springt, was zu einer Intensitätsmodulation des vom Sendelaser 1 gelieferten Gleichlichtes 7 führt. Den Elektroabsorptionsmodulator 2 verläßt daher intensitätsmodulierte Sendestrahlung 8 mit der Sendewellenlänge λ_{L}.

Soll in der entgegengesetzten Richtung übertragen werden, so muß der Zustand nach Figur 4 hergestellt werden, in welchem die Modulationssignalquelle 10 abgeschaltet ist.

Die Steuereinrichtung 11 muß bei Empfang für eine solche Sperrspannung sorgen, daß die in Figur 5 erkennbare Absorptionskante oberhalb der Wellenlänge der Empfangsstrahlung 9 liegt. Entspricht die Empfangswellenlänge λ_{L}, so kommt also beispielsweise der in Figur 5 unterbrochen dargestellte Kurvenverlauf in Frage. Die Empfangswellenlänge kann sogar größer als der in Figur 5 schematisch angegebene Wert λ_{L} sein, wenn sich die Absorbitionskante mit einer entsprechenden Sperrspannung noch zu höheren Wellenlängenwerten verschieben läßt. Allerdings muß dann eine geringere Absorption in Kauf genommen werden.

## Patentansprüche

1. Sendeanordnung für optische Signale, mit einer Strahlungsquelle (1) der Sendewellenlänge λ_{L} und einem nachgeschalteten Elektroabsorptionsmodulator (2), dadurch gekennzeichnet, daß
a) der Elektroabsorptionsmodulator (2) so angeordnet ist, daß Sendestrahlung (8) der Sendewellenlänge λ_{L} in einer Richtung und Empfangsstrahlung (9) der Empfangswellenlänge λ_{E} in entgegengesetzter Richtung in den Elektroabsorptionsmodulator (2) gelangen kann,
b) die Strahlungsquelle (1) direkt modulierbar ist,
c) der Elektroabsorptionsmodulator (2) transparent für die modulierte Sendestrahlung (8) der Strahlungsquelle (1) und absorbierend für die Empfangsstrahlung (9) betreibbar ist und dabei als Empfangsdetektor dient.

2. Sendeanordnung für optische Signale, mit einer Strahlungsquelle (1) der Sendewellenlänge λ_{L} und einem nachgeschalteten Elektroabsorptionsmodulator (2), dadurch gekennzeichnet, daß
a) der Elektroabsorptionsmodulator (2) so angeordnet ist, daß Sendestrahlung (8) der Sendewellenlänge λ_{L} in einer Richtung und Empfangsstrahlung (9) derselben Sendewellenlänge λ_{L} oder der abweichenden Empfangswellenlänge λ_{E} in entgegengesetzter Richtung in den Elektroabsorptionsmodulator (2) gelangen kann,
b) die Strahlung (7) der Strahlungsquelle (1) in bestimmten Zeiträumen mit Hilfe des Elektroabsorptionsmodulators (2) modulierbar ist,
c) der Elektroabsorptionsmodulator (2) in anderen Zeiträumen absorbierend für die Empfangsstrahlung (9) steuerbar ist und dabei als Empfangsdetektor dient.

3. Sendeanordnung für optische Signale, mit einer Strahlungsquelle (1) der Sendewellenlänge λ_{L} und einem nachgeschalteten Elektroabsorptionsmodulator (2), dadurch gekennzeichnet, daß
a) der Elektroabsorptionsmodulator (2) so angeordnet ist, daß Sendestrahlung (8) der Sendewellenlänge λ_{L} in einer Richtung und Empfangsstrahlung (9) derselben Sendewellenlänge λ_{L} oder der abweichenden Empfangswellenlänge λ_{E} in entgegengesetzter Richtung in den Elektroabsorptionsmodulator (2) gelangen kann,
b) der Elektroabsorptionsmodulator (2) in bestimmten Zeiträumen transparent für die Strahlung (7) der Strahlungsquelle (1) is,
c) die Strahlung (7) der Strahlungsquelle (1) in bestimmten Zeiträumen mit Hilfe des Elektroabsorptionsmodulators (2) modulierbar ist,
d) der Elektroabsorptionsmodulator (2) in anderen Zeiträumen absorbierend für die Empfangsstrahlung (9) steuerbar ist und dabei als Empfangsdetektor dient.

4. Sendeanordnung nach Anspruch 1, dadurch gekennzeichnet, daß bei voneinander abweichenden Sende- und Empfangswellenlängen λ_{L} beziehungsweise λ_{E} der Elektroabsorptionsmodulator (2) transparent für die modulierte Sendestrahlung (8) der Strahlungsquelle (1) und gleichzeitig absorbierend für die Empfangsstrahlung (9) betreibbar ist.

5. Sendeanordnung nach Anspruch 1, dadurch gekennzeichnet, daß die Empfangswellenlänge λ_{E} kleiner als die Sendewellenlänge λ_{L} ist.

6. Sendeanordnung nach einem der vorangehenden Ansprüche, dadurch gekennzeichnet, daß der Elektroabsorptionsmodulator (2) durch Ändern seiner Sperrspannung vom transparenten in den absorbierbaren Zustand schaltbar ist.

7. Sendeanordnung nach einem der vorangehenden Ansprüche, dadurch gekennzeichnet, daß die Strahlungsquelle als Sendelaser (1) ausgebildet und mit dem Elektroabsorptionsmodulator (2) auf demselben Substrat (3) angeordnet ist.
